# EUROPEAN PATENT APPLICATION

(11) **EP 1 906 044 A1**
(43) Date of publication of application: **02.04.2008**
(21) Application number: 06020310.6
(22) Date of filing: 27.09.2006
(51) Int. Cl.: F16D 65/60

(54) **Anchor bracket**

(71) Applicant: Haldex Brake Products AB, 261 24 Landskrona (SE)
(72) Inventor: Olsson, Ake, 26023 Kageröd (SE)
(74) Representative: Hruschka, Jürgen

(57) **Abstract**

The present invention is relating to an anchor bracket (4) for a control arm arrangement for a brake lever of a road vehicle, in which the control arm is being pivotally connected to the brake lever. The anchor bracket (4) is comprising a fastening section (9) for attachment to a frame part of the vehicle, a cooperating section (8) for connection to the control arm and an intermediate section (10) between the fastening section (9) and the cooperating section (8), whereby the cooperating section (8) comprises an axial dimension specifically selected with regard to the fastening section (9) and the intermediate section (10) so that several distances between the frame part (2) of the vehicle and the brake lever in different installations are covered.

## Description

### Technical Field

This invention relates to an anchor bracket and, moreover, to a control arm arrangement for a road vehicle brake lever comprising such an anchor bracket and a drum brake embodying such a control arm arrangement.

### Background of the Invention

A conventional brake lever for a heavy road vehicle is mounted on a S-cam shaft of a drum brake and is connected to a brake cylinder, as this is well known in the art. It contains an automatic slack adjuster, which for its function needs a control signal, provided by a control arm connected to a fix-point on the vehicle, normally by means of an anchor bracket. The anchor bracket is used as a reference to measure the angular travel of the automatic slack adjuster of the drum brake during a brake application cycle in order to enable the automatic slack adjuster to adjust the brake lining to the drum clearance resulting from wear.

Conventionally, the control arm and the anchor bracket are connected by means of a screw-joint, containing a washer and possibly a wear-reducing plastic insert. Wear as such is undesirable as it would lead to inaccurate functioning of the brake adjuster. At mounting the corresponding holes in the two components have to be aligned and the screw-joint (screw and nut) securely fastened. Due to vibrations and mutual movements it is difficult to obviate wear and noise. The screw-joint may also give difficulties at later dismounting. Such a control arm arrangement for a brake lever is, for example, known from US-A-4 440 268.

Another possibility is to provide an anchor bracket with a slot for cooperation with a suitably shaped end of the control arm. The cooperating contact surfaces are small, which means that the problem with wear is not obviated, even if the mounting difficulties are decreased.

In order to keep the wear to a minimum, even if the arrangement is subjected to vibrations and big forces, EP 0 624 266 B1 in the name of the applicant is suggesting a solution, in which the facing ends of both the control arm and the anchor bracket are provided with flanges, so that the closely cooperating ends are forming an U-shape in cross-section, respectively. The arrangement is extremely easy to mount and dismount, as there are no connection means and the contact area between the cooperating parts is large enough so as to minimize the influences of impacts and vibrations as regards wear.

At present, most anchor bracket designs have to be specifically tailored in order to cope with the different brake adjuster arrangements which are individually dimensioned for different types of drum brakes. Especially for maintenance, this leads to the necessity to always keep a considerable number of variants of such anchor brackets on stock, so that they can be supplied when needed. This is, of course, undesirable from a costs point of view.

It is therefore an object of the present invention to provide an universal arrangement, which can deal with alternative dimensions of different control arm installations.

### The Invention

This object is solved by an anchor bracket according to claim 1, by a control arm arrangement according to claim 8 and by a drum brake according to claim 9.

According to the present invention, an anchor bracket for a control arm arrangement for a brake lever of a road vehicle, in which the control arm is being pivotally connected to the brake lever and comprises a receiving section with flanges to form an U-shape in cross section, is comprising a fastening section for attachment to a frame part of the vehicle, a cooperating section for connection to the receiving section of the control arm and an intermediate section between the fastening section and the cooperating section, whereby the cooperating section comprises such an axial dimension with regard to the fastening section and the intermediate section that the receiving section of the control arm is always supported by the cooperating section of the anchor bracket over its entire length irrespective of the distance between the frame part of the vehicle and the brake lever.

Preferably, the cooperating section is configured as an U-shape with two flanges abutting against the flanges of the receiving section of the control arm.

Alternatively, the cooperating section can be configured as a rod or tube, wherein both are rectangular or square in shape, respectively, so as to fit into the U-shape of the receiving section of the control arm.

According to a preferred embodiment of the invention, an intermediate section of the anchor bracket, which connects the fastening section and the cooperating section, is configured in such a way so as to continuously widen from the width of the cooperating section to the width which is close to the fastening section. The width of the intermediate section, which is close to the fastening section or which may be identical to the lower width of said fastening section, shall be, according to the invention, at least C x L/(t)³ and preferably at least 1,4 x C x L/(t)³. In these equations, C indicates a constant which is depending on the material used for the anchor bracket and which is proportional to the inverse of the modulus of elasticity of the material of which the anchor bracket is made of. L indicates the entire length of the anchor bracket and t the thickness of the material of the anchor bracket, whereby all measures are in millimetres. When using steel as material for the anchor bracket, the constant C shall be in the range of 15 - 25 and shall preferably set to be C=20. In case aluminium is used as material for the anchor bracket, the constant C shall be in the range of 50 - 70 and shall preferably set to be C=60.

By selecting the dimensions of the anchor bracket in such a way, deflections which might occur in cases in which, due to the given dimensions, the receiving section of the control arm is interacting at the outer end of the cooperating section of the anchor bracket, and which will reduce the accuracy of the brake adjuster, can be substantially minimized.

For fastening the anchor bracket to an underframe part of the vehicle, the fastening section comprises a hole pattern with at least two holes. Using more than one fastening screw will improve the stiffness of the bracket. Since the location of the screws for fastening the bracket to the underframe part is varying between different installations of drum brakes, these patterns are dimensioned so as to suit the different screw dimensions and locations in such different vehicle installations. Preferably, the hole pattern of the fastening section comprises two oblong, arc-shaped holes, the arcs of which are diverging so as to additionally allow for angular adjustments during assembly of the anchor bracket.

The invention also refers to a control arm arrangement for a brake lever of a road vehicle which is comprising a control arm pivotally connected to a brake lever and an anchor bracket as described above for attachment to a frame part of the vehicle. Also, the invention refers to a drum brake for heavy road vehicles which is embodying such a control arm arrangement.

### Brief Description of the Drawings

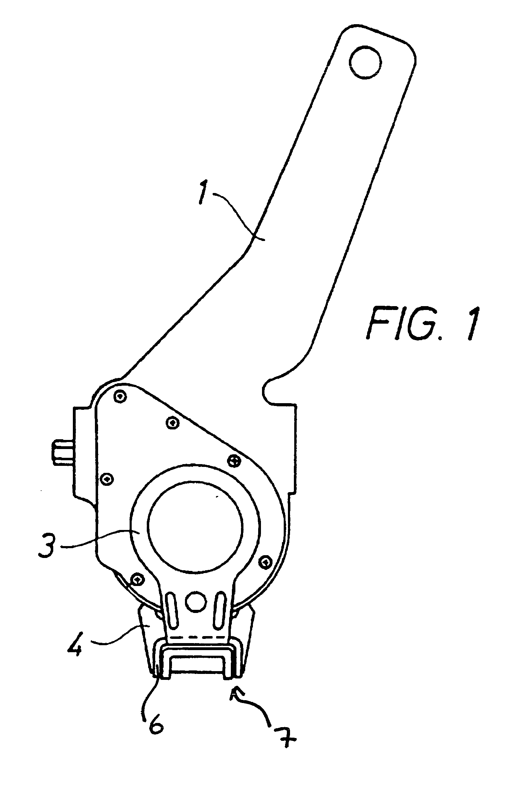

The invention will be described in further detail below with reference being made to the accompanying drawing, in which
- Fig. 1: is a side view of a road vehicle automatic brake lever with a control arm arrangement as known in the prior art;
- Fig. 2: is an end view of the arrangement shown in Fig. 1,
- Fig. 3: is a schematic perspective view of an anchor bracket according to the invention; and

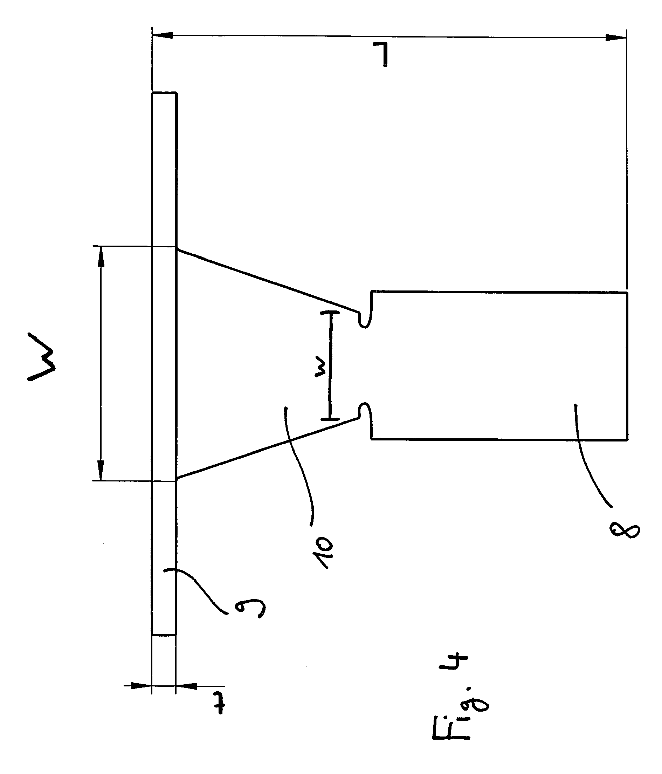

- Fig. 4: is a plan view of the anchor bracket of Fig. 3.

### Detailed Description of a Preferred Embodiment

A conventional brake lever containing an automatic slack adjuster has the numeral 1. As is well known in the art and accordingly not shown, such a lever is mounted on a S-cam shaft for a drum brake of a heavy road vehicle and is connected to a brake cylinder push rod.

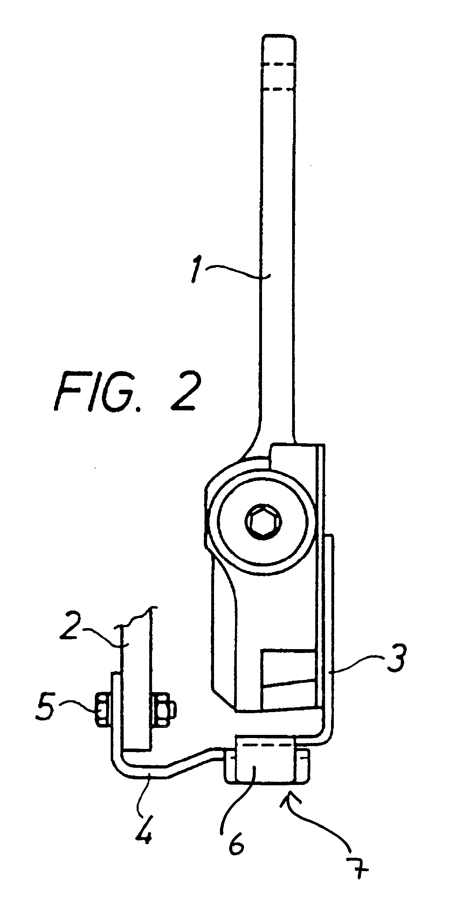

A brake lever 1 of this kind, which in operation is rocking about its shaft at each brake application and release, needs a fixed reference point for its internal slack adjusting mechanism. This reference point may, as shown in Fig. 2, be an underframe part 2, which is also used for journaling the S-cam brake shaft (not shown).

The arrangement for connecting the brake lever 1 with the underframe part 2 consists of two components, namely a control arm 3 and an anchor bracket 4. The control arm 3 is pivotally connected to the brake lever 1 in order to transmit a control signal to internal parts thereof, whereas the anchor bracket 4 is connected to the underframe part 2 by means of at least one screw-joint 5 in a hole in the anchor bracket 4 so as to allow position adjustments.

The lower part of the control arm 3 is bent at a right angle and is there provided with flanges 6 so as to form a receiving section 7 having an U-shape in cross-section.

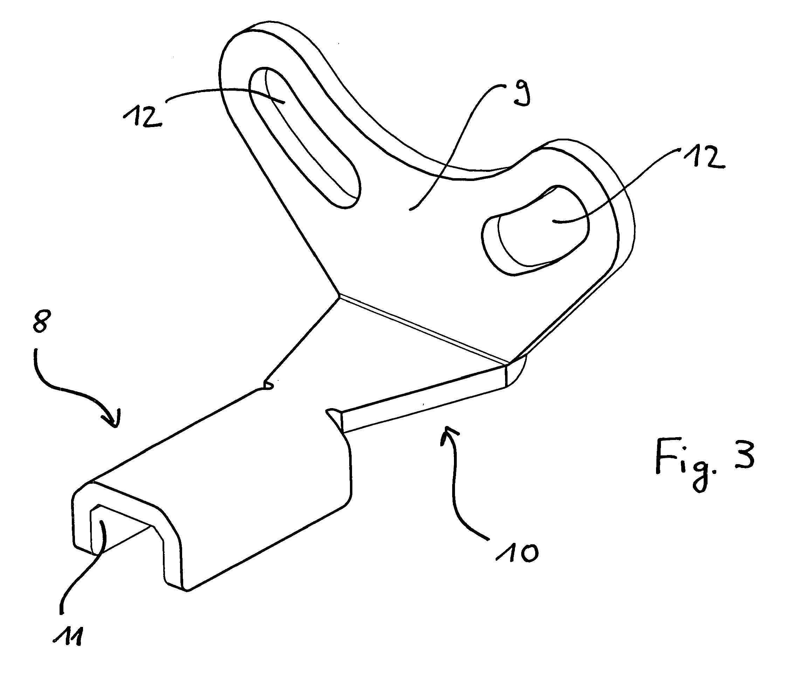

In Fig. 3, an anchor bracket 4 according to the invention is shown.

The anchor bracket 4 is comprising a cooperating section 8 and a fastening section 9 with which the anchor bracket 4 is to be fastened to the frame part 2 of the vehicle. The cooperating section 8 is connected to the fastening section 9 by a substantially triangular-shaped intermediate section 10.

In a corresponding way the cooperating section 8 of the anchor bracket 4 is bent and is provided with flanges 11 so as also to have an U-shape in cross-section. The dimensioning of the cooperating section 8 is such that relative axial movements between the U-shaped end of the receiving section 7 of the control arm 3 and the U-shaped end of the cooperating section 8 of the anchor bracket 4 are possible without loosing mutual support at any time, but that they fit together rather closely side-ways. In this way a very large contact area between the two U-shaped parts 7 and 8 is obtained resulting in minimal wear. The arrangement is easy to install, and there are no holes, screws, nuts, washers or inserts as in the arrangement it is to replace.

The intermediate section 10 is substantially triangular in shape so as to continuously widen from the width w of the cooperating section 8 to the width W very close to the fastening section 9. The width W, in mm, close to the fastening section 9 shall be at least C x L/(t)³ and preferably at least 1,4 x C x L/(t)³, so as to provide enough stiffness against bending and twisting deflections, when the distance between the frame part 2 of the vehicle and the brake lever 1 is very large. C indicates a constant which is proportional to the inverse of the modulus of elasticity of the material used for the anchor bracket 4, whereby L indicates the length of the anchor bracket 4 and t indicates the thickness of the material to be used for the anchor bracket 4, both in mm.

For steel C shall be preferably C=20, whereas for aluminium C shall be preferably C=60.

As an example, if steel is used as the material for the anchor bracket 4 and L is 80 mm and t = 4 mm, the width W shall be at least 25 mm and preferably at least 35 mm, however, if aluminium is used as material for the anchor bracket 4 with a thickness of t = 5 mm instead, the width W shall be at least 38 mm and preferably at least 54 mm. Of course, according to the invention, the constant C, the length L and the thickness t can be further modified so as to fit different installation possibilities both as regards the dimensional and the stiffness requirements.

In order to allow angular adjustments while fastening the anchor bracket 4 to the frame part 2, the fastening section 9 comprises two oblong holes 12, the arcs of which are diverging.

It becomes obvious from the above description, that by the specific configuration of the anchor bracket according to the invention, care can be taken of most dimensional requirements which occur in the different control arm and adjuster mechanism arrangements in drum brakes presently on the market. Only one single, universally configured anchor bracket according to the invention may factually be needed.

## Claims

1. An anchor bracket for a control arm arrangement for a brake lever (1) of a road vehicle, in which the control arm (3) is being pivotally connected to the brake lever (1) and comprises a receiving section (7) with flanges (6) to form an U-shape in cross-section, the anchor bracket (4) comprising a fastening section (9) for attachment to a frame part (2) of the vehicle, a cooperating section (8) for connection to the receiving section (7) of the control arm (3) and an intermediate section (10) between the fastening section (9) and the cooperating section (8), **characterized in that** the cooperating section (8) comprises such an axial dimension with regard to the fastening section (9) and the intermediate section (10) that the receiving section (7) of the control arm (3) is always supported by the cooperating section (8) of the anchor bracket (4) over its entire length irrespective of the distance between the frame part (2) of the vehicle and the brake lever (1).

2. Anchor bracket according to claim 1, in which the cooperating section (8) is configured as an U-shape with two flanges (11) abutting against flanges (6) of the receiving section (7) of the control arm (3).

3. Anchor bracket according to claim 1, in which the cooperating section (8) is configured as a rod or tube, which are rectangular or square in shape, respectively.

4. Anchor bracket according to one of claims 1, 2 or 3, in which the width of intermediate section (10) is continuously widening from the width (w) of the cooperating section (8) to the width (W) close to the fastening section (9).

5. Anchor bracket according to claim 4, in which the width (W), in mm, close to the fastening section (9) shall be at least C x L/(t)³ and preferably at least 1,4 x C x L/(t)³, whereby C indicates a constant which is proportional to the inverse of the modulus of elasticity of the material of the anchor bracket (4), L indicates the entire length of the anchor bracket (4) in mm and t the thickness of said material of the anchor bracket (4) in mm.

6. Anchor bracket according to claim 5, in which the material is steel and C is set to be in the range of 15 - 25.

7. Anchor bracket according to claim 5, in which the material is aluminium and C is set to be in the range of 50 - 70.

8. Anchor bracket according to one of the preceding claims, in which the fastening section (9) comprises a hole pattern with at least two holes (12).

9. Anchor bracket according to claim 8, in which the hole pattern consists of two oblong arc-shaped holes (12) which are diverging.

10. Control arm arrangement for a brake lever (1) of a road vehicle comprising a control arm (3) pivotally connected to the brake lever (1) and an anchor bracket (4) according to one of the claims 1 to 9 for attachment to a frame part (2) of the vehicle.

11. Drum brake of a heavy road vehicle comprising a control arm arrangement according to claim 10.
